# EUROPÄISCHE PATENTANMELDUNG

(11) **EP 4 006 848 A1**
(43) Veröffentlichungstag der Anmeldung: **01.06.2022**
(21) Anmeldenummer: 21208203.6
(22) Anmeldetag: 15.11.2021
(51) Int. Cl.: G06V 20/58, G06V 10/82, G06V 10/778

(54) **VERFAHREN ZUM TESTEN EINES OBJEKTERKENNUNGSSYSTEMS**

(30) Priorität: 30.11.2020 DE 102020215017
(71) Anmelder: Siemens Mobility GmbH, 81739 München (DE)
(72) Erfinder: Kluckner, Stefan, 12487 Berlin (DE); Reinbothe, Christoph, 15366 Hoppegarten (DE); Vidal Migallon, Irina, 10999 Berlin (DE)

(57) **Zusammenfassung**

Die Erfindung betrifft ein Verfahren zum Testen eines Objekterkennungssystems 500 mit den folgenden Schritten:
- Erstellen eines dreidimensionalen Szenarios 200 mit Objekten 201, 202, 203 und von aus dem dreidimensionalen Szenario 200 abgeleiteten virtuellen Sensordaten 112, wobei die virtuellen Sensordaten 112 für mindestens einen Ort des dreidimensionalen Szenarios 200 berechnet werden;
- Durchführung einer Objekterkennung mittels der virtuellen Sensordaten 112;
- Vergleich von mittels der Objekterkennung erkannten Objekten und erkannten Objektpositionen mit aus dem dreidimensionalen Szenario 200 vorgegebenen Objekten und vorgegebenen Objektpositionen; und
- Berechnen einer Fehlerrate 117 aus dem Vergleich.

Die Erfindung betrifft ferner eine Recheneinheit und ein Computerprogramm zur Durchführung des Verfahrens sowie ein Objekterkennungssystem 500.

## Beschreibung

Die Erfindung betrifft ein Verfahren zum Testen eines Objekterkennungssystems, eine Recheneinheit und ein Computerprogramm zur Durchführung des Verfahrens sowie ein Objekterkennungssystem.

Objekterkennungssysteme finden immer breitere Anwendung in verschiedenen Bereichen wie beispielsweise im Gesundheitswesen oder in Bezug zu autonomen Fahrzeugen. Dabei kommen immer öfter künstliche Intelligenzen zum Einsatz, die mittels Trainingsdaten trainiert werden können und anschließend als trainiertes System zur Verfügung stehen. Im Bereich außerhalb der künstlichen Intelligenzen sind dabei empirische Tests unter starker Belastung, auch bekannt als Stresstests oder Lasttests, etabliert, mit denen solche Systeme beispielsweise zertifiziert werden können.

Für künstliche Intelligenzen sind solche Stresstests noch nicht etabliert.

Der Erfindung liegt die Aufgabe zugrunde, ein Verfahren zum Testen eines Objekterkennungssystems zur Verfügung zu stellen, mit dem ein solcher Stresstest ermöglicht wird. Weitere Aufgaben der Erfindung sind, entsprechende Recheneinheiten und Computerprogramme sowie ein so getestetes Objekterkennungssystem bereitzustellen.

Diese Aufgaben werden durch das Verfahren zum Testen eines Objekterkennungssystems, die Recheneinheit, das Computerprogramm sowie das Objekterkennungssystem der unabhängigen Patentansprüche gelöst. Vorteilhafte Ausgestaltungen sind in den Unteransprüchen angegeben.

Die Erfindung umfasst ein Verfahren zum Testen eines Objekterkennungssystems, bei dem die im Folgenden beschriebenen Schritte durchgeführt werden. Zunächst wird ein dreidimensionales Szenario mit Objekten erstellt. Aus dem dreidimensionalen Szenario werden abgeleitete virtuelle Sensordaten erstellt, wobei die virtuellen Sensordaten für mindestens einen Ort des dreidimensionalen Szenarios berechnet werden. Anschließend wird eine Objekterkennung mittels der virtuellen Sensordaten durchgeführt. Die Objekterkennung kann dabei mittels einer trainierten künstlichen Intelligenz oder mittels maschinellem Lernen erfolgen. Die Objekterkennung kann derart durchgeführt werden, dass anhand der virtuellen Sensordaten Objekte und Objektpositionen erkannt werden. Anschließend werden mittels der Objekterkennung erkannte Objekte und erkannte Objektpositionen mit aus dem dreidimensionalen Szenario vorgegebenen Objekten und vorgegebenen Objektpositionen verglichen. Aus diesem Vergleich wird eine Fehlerrate berechnet.

Die aus dem dreidimensionalen Szenario abgeleiteten virtuellen Sensordaten dienen dabei als Datensatz, mit dem die Objekterkennung einem Stresstest unterzogen werden kann. Für den Stresstest stehen neben den virtuellen Sensordaten auch die aus dem dreidimensionalen Szenario bekannten und damit vorgegebenen Objekte und Objektpositionen zur Verfügung, so dass eine Einschätzung ermöglicht wird, wie gut die Objekterkennung funktioniert. Dies spiegelt sich dann in der Fehlerrate wieder, wobei die Fehlerrate ein Maß dafür sein kann, wie viele Fehler das Objekterkennungssystem beispielsweise in einer vorgegebenen Zeit oder für eine vorgegebene Anzahl von verschiedenen virtuellen Sensordaten für beispielsweise unterschiedliche Positionen im dreidimensionalen Szenario macht.

Insbesondere kann das dreidimensionale Szenario anhand von Vorgaben erstellt werden, wobei in die Vorgaben einfließen kann, welche Parameter im Allgemeinen zu Problemen mit der Objekterkennung führen und so ein auf problematische Parameter zugeschnittener Stresstest ermöglicht werden. Dies ist vorteilhaft, da ansonsten das Objekterkennungssystem unter Realbedingungen getestet werden müsste und dabei insbesondere problematische Parameter gezielt unter Realbedingungen ausgewählt werden müssten. Dabei könnte es beispielsweise sein, dass Parameter wie eine Jahreszeit erst nach einem gewissen Zeitablauf wieder unter Realbedingungen getestet werden kann, so dass der Stresstest ebenfalls eine geraume Zeit in Anspruch nehmen würde. Durch die Simulation dieser Parameter wird ein Test auch bei anderen vorherrschenden Realbedingungen möglich.

In einer Ausführungsform umfassen die virtuellen Sensordaten virtuelle Kameradaten und/oder virtuelle LIDAR-Daten. Es kann also vorgesehen sein, anhand des dreidimensionalen Szenarios zu ermitteln, welches Bild eine Kamera an einer bestimmten Position im dreidimensionalen Szenario aufnehmen würde. Ferner kann alternativ oder zusätzlich vorgesehen sein, anhand des dreidimensionalen Szenarios zu ermitteln, welche Daten ein LIDAR-Sensor liefern würde. Diese Daten können dann in die Objekterkennung einfließen. Insbesondere kann das Verfahren also eingesetzt werden, um einen Stresstest für ein Objekterkennungssystem durchzuführen, das Kameradaten und/oder LIDAR-Daten auswerten soll. Virtuelle Kameradaten umfassen dabei Informationen, wie ein mittels Kamera aufgenommenes Bild aussehen würde. Insbesondere können virtuelle Kameradaten also einen Farbpalettenwert für jeden Pixel umfassen. Virtuelle LIDAR-Daten hingegen umfassen Informationen, wie mittels LIDAR-Sensor aufgenommene Laufzeiten für unterschiedliche Raumrichtungen gemessen werden würden.

In einer Ausführungsform des Verfahrens wird beim Erstellen des dreidimensionalen Szenarios ein erster Parametersatz mit einer vorgegebenen Anzahl an Parametern berücksichtigt wird und wobei die Fehlerrate in Abhängigkeit von den Parametern berechnet wird. Dadurch wird ermöglicht, Parameter für das dreidimensionale Szenario vorzugeben, die gegebenenfalls Einfluss auf die virtuellen Sensordaten hat. Durch die Berechnung der Fehlerrate in Abhängigkeit von den Parametern kann gegebenenfalls erkannt werden, bei welchen Parametern das Objekterkennungssystem unzureichend arbeitet. Dabei kann vorgesehen sein, dass die Parameter im Vorfeld von einem menschlichen Experten definiert werden.

In einer Ausführungsform umfassen die Parameter eine Tageszeit und/oder einen Sonnenstand und/oder Wetterkonditionen und/oder eine Jahreszeit und/oder eine geographische Region und/oder einen Landschaftstyp. Diese Parameter können insbesondere Einfluss auf Sensordaten von realen Sensoren, insbesondere von Kamera-Sensoren oder LIDAR-Sensoren, haben, so dass diese Parameter während des Stresstests getestet werden sollten. Insbesondere kann vorgesehen sein, verschiedene Kombinationen der Parameter in dreidimensionalen Szenarien mit einer identischen Anordnung der Objekte oder mit einer jeweils verschiedenen Anordnung der Objekte zu wählen und jeweils die virtuellen Sensordaten für jede der Kombinationen zu berechnen. Dadurch kann ein breiter Ausschnitt an unterschiedlichen Kombinationsmöglichkeiten abgedeckt und etwaige Schwachstellen der Objekterkennung identifiziert werden.

In einer Ausführungsform wird anhand der Fehlerrate ein zweiter Parametersatz ausgewählt wird, wobei das Verfahren anschließend für den zweiten Parametersatz erneut ausgeführt wird. Dies kann insbesondere dann erfolgen, wenn für den ersten Parametersatz unterschiedliche Szenarien mit unterschiedlichen Parametern berücksichtigt wurden und nun im zweiten Parametersatz insbesondere die Szenarien mit hoher Fehlerrate ausgewählt werden. Dies ermöglicht eine genauere Bestimmung der Parameter, bei denen die Objekterkennung an ihre Grenzen stößt.

In einer Ausführungsform ist das Objekterkennungssystem eingerichtet, reale Sensordaten anhand von Umgebungsbedingungen zu bewerten und eine Information auszugeben, wobei die Information angibt, ob aufgrund der bei bestimmten Umgebungsbedingungen oder Kombinationen von Umgebungsbedingungen eine erhöhte Fehlerwahrscheinlichkeit vorliegt. Verschiedene reale Umgebungsbedingungen können dabei jeweils den Parametern des ersten Parametersatzes entsprechen. Das Wissen, dass bei bestimmten Umgebungsbedingungen oder Kombinationen von Umgebungsbedingungen eine erhöhte Fehlerrate vorliegt, kann dabei aus der Durchführung des Verfahrens mit den unterschiedlichen Parametern gewonnen worden sein.

In einer Ausführungsform wird die Fehlerrate gespeichert. Dadurch können später anhand der Fehlerrate Entscheidungen des Objekterkennungssystems beeinflusst oder Informationen ausgegeben werden.

In einer Ausführungsform erfolgt die Objekterkennung mittels eines trainierten neuronalen Netzwerkes. Das trainierte neuronale Netzwerk kann dabei mittels den aus dem Stand der Technik bekannten Trainingsverfahren trainiert sein.

In einer Ausführungsform werden ferner Trainingsdaten für das neuronale Netzwerk erstellt, wobei bei der Erstellung der Trainingsdaten die Fehlerrate berücksichtigt wird. Dies ermöglicht, das neuronale Netzwerk nach der Durchführung des Verfahrens zum Testen des Objekterkennungssystems weiter zu trainieren, insbesondere wenn festgestellt wird, dass für bestimmte Parameter oder Kombinationen von Parametern eine unzureichende Objekterkennung vorliegt.

In einer Ausführungsform wird das dreidimensionale Szenario mittels einer 3D-Engine erstellt. Dabei können insbesondere Spiele-Engines zum Einsatz kommen wie beispielsweise die Unity-Engine, die Unreal-Engine oder die CryEngine. Die genannten Spiele-Engines ermöglichen eine realitätsgetreue Simulation einer dreidimensionalen Szenerie und sind somit für die Berechnung der virtuellen Sensordaten geeignet.

In einer Ausführungsform umfassen die Objekte Hindernisse und/oder Straßennutzer und/oder Fußgänger und/oder Fahrzeuge und/oder Radfahrer und/oder Schienen und/oder ein Lichtraumprofil.

Die Erfindung umfasst ferner eine Recheneinheit, die eingerichtet ist, das erfindungsgemäße Verfahren durchzuführen. Dazu kann die Recheneinheit insbesondere einen Prozessor aufweisen, in den die künstliche Intelligenz, insbesondere das trainierte neuronale Netz, geladen werden kann. Ferner kann die Recheneinheit eingerichtet sein, das dreidimensionale Szenario und die aus dem dreidimensionalen Szenario abgeleiteten virtuellen Sensordaten zu berechnen und der künstlichen Intelligenz zuzuführen.

Die Erfindung umfasst ferner ein Computerprogramm, umfassend Befehle, die bei Ausführung des Computerprogramms durch einen Computer diesen veranlassen, das erfindungsgemäße Verfahren auszuführen. Der Computer kann dabei insbesondere die erfindungsgemäße Recheneinheit beinhalten.

Die Erfindung umfasst ferner ein Objekterkennungssystem mit einem Eingang für Sensordaten und einem Ausgang. Das Objekterkennungssystem wurde dabei mit dem erfindungsgemäßen Verfahren getestet. Die Fehlerrate ist im Objekterkennungssystem gespeichert. Das Objekterkennungssystem ist außerdem eingerichtet, eine Güte einer Objekterkennung aus realen Sensordaten anhand der Fehlerrate zu bewerten.

Durch die Bewertung der Güte der Objekterkennung ist das Objekterkennungssystem in der Lage, gegebenenfalls zu reagieren, wenn die realen Sensordaten darauf hindeuten, dass gegebenenfalls nur eine unzureichende Objekterkennung zur Verfügung steht, insbesondere, wenn Parameter mit einer hohen Fehlerrate detektiert werden. Es kann beispielsweise sein, dass das Objekterkennungssystem bei bestimmten Beleuchtungsverhältnissen oder bei bestimmten Wetterkonditionen unzureichend arbeitet. Werden diese anhand der realen Sensordaten detektiert, kann entsprechend die Güte schlechter bewertet werden als bei anderen Konditionen.

In einer Ausführungsform des Objekterkennungssystems ist dieses eingerichtet, anhand der Fehlerrate einen Warnhinweis auszugeben, wenn die Güte der Objekterkennung unter einem vorgegebenen Grenzwert liegt. Dadurch kann beispielsweise, wenn das Objekterkennungssystem in einem Fahrzeug eingesetzt wird, ein Warnhinweis an den Fahrer ausgegeben werden, dass das Objekterkennungssystem derzeit unzureichend arbeitet.

In einer Ausführungsform des Objekterkennungssystems umfasst die Objekterkennung mehrere unterschiedliche trainierte neuronale Netzwerke. Das Objekterkennungssystem ist eingerichtet, ein zu verwendendes trainiertes neuronales Netzwerk aus den unterschiedlichen trainierten neuronalen Netzwerken anhand der Fehlerrate auszuwählen. Dabei kann es sein, dass unterschiedliche trainierte neuronale Netzwerke für unterschiedliche Parameter unterschiedlich gut funktionieren. Hier kann dann das für die aktuell vorliegenden Parameter am besten geeignete neuronale Netzwerk ausgewählt werden.

In einer Ausführungsform des Objekterkennungssystems ist dieses eingerichtet, eine Information auszugeben, wobei die Information angibt, ob aufgrund der bei bestimmten Parametern oder Parameterkombinationen eine erhöhte Fehlerwahrscheinlichkeit vorliegt.

Die oben beschriebenen Eigenschaften, Merkmale und Vorteile dieser Erfindung sowie die Art und Weise, wie diese erreicht werden, werden klarer und deutlicher verständlich durch die Erläuterungen der folgenden, stark vereinfachten, schematischen Darstellungen bevorzugter Ausführungsbeispiele. Hierbei zeigen in jeweils schematisierter Darstellung
- FIG 1: ein Ablaufdiagramm des Verfahrens;
- FIG 2: ein dreidimensionales Szenario;
- FIG 3: aus dem dreidimensionalen Szenario abgeleitete virtuelle Sensordaten;
- FIG 4: eine Recheneinheit zur Durchführung des Verfahrens; und
- FIG 5: ein Objekterkennungssystem.

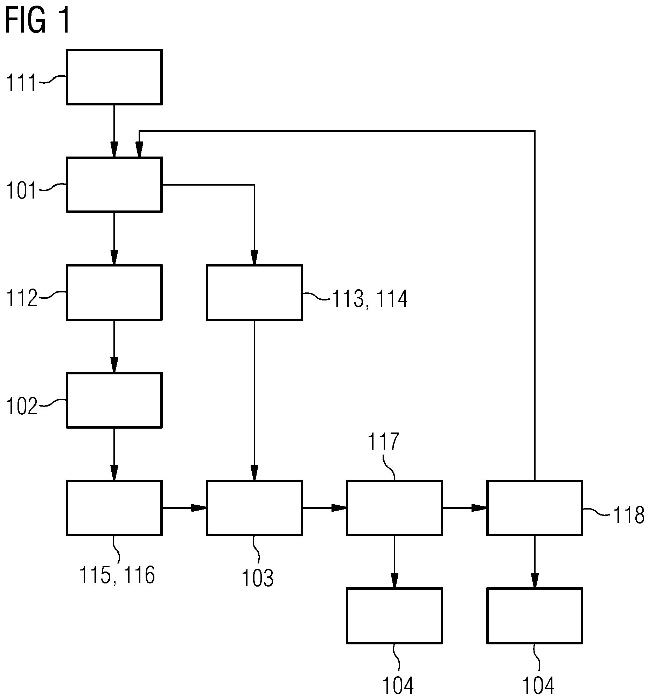

FIG 1 zeigt ein Ablaufdiagramm 100 eines Verfahrens zum Testen eines Objekterkennungssystems. Dabei wird in einem ersten Verfahrensschritt 101 ein dreidimensionales Szenario mit Objekten erstellt. Für diesen ersten Verfahrensschritt 101 können Eingabeparameter 111 zur Verfügung stehen, wobei vorgesehen sein kann, dass ein Nutzer oder Bediener des Verfahrens die Eingabeparameter 111 vorgibt. Aus dem dreidimensionalen Szenario werden virtuelle Sensordaten 112 abgeleitet, wobei die virtuellen Sensordaten 112 für mindestens einen Ort des dreidimensionalen Szenarios berechnet werden. Ferner werden aus dem dreidimensionalen Szenario vorgegebene Objekteigenschaften wie vorgegebene Objekte 113 und vorgegebene Objektpositionen 114 bestimmt. In einem zweiten Verfahrensschritt 102 wird eine Objekterkennung mittels der virtuellen Sensordaten 112 durchgeführt. Dabei werden insbesondere erkannte Objekte 115 und erkannte Objektpositionen 116 ermittelt. In einem dritten Verfahrensschritt 103 werden mittels der Objekterkennung erkannte Objekte 115 und erkannte Objektpositionen 116 mit den vorgegebenen Objekten 113 und vorgegebenen Objektpositionen 114 verglichen und eine Fehlerrate 117 aus dem Vergleich berechnet. Aus der Fehlerrate 117 kann eine Fehler-Heatmap 118 berechnet werden. Sowohl die Fehlerrate 117 als auch die Fehler-Heatmap 118 können in einem Ausgabeschritt 104 ausgegeben werden.

Die Objekterkennung im zweiten Verfahrensschritt 102 kann dabei mittels einer künstlichen Intelligenz erfolgen.

In einem Ausführungsbeispiel wird beim Erstellen des dreidimensionalen Szenarios ein erster Parametersatz mit einer vorgegebenen Anzahl an Parametern berücksichtigt, wobei der ersten Parametersatz identisch zu den Eingabeparametern 111 sein kann. Die Fehlerrate 117 wird in Abhängigkeit von den Parametern berechnet. Dies kann insbesondere die Berechnung der Fehler-Heatmap 118 umfassen, wobei die Parameter als mehrdimensionale Definitionsmenge und die Fehlerrate 117 als Funktion der mehrdimensionalen Definitionsmenge die Fehler-Heatmap 118 bilden können.

In einem Ausführungsbeispiel wird anhand der Fehlerrate 117 und/oder anhand der Fehler-Heatmap 118 ein zweiter Parametersatz ausgewählt und das Verfahren anschließend für den zweiten Parametersatz erneut ausgeführt. Dies ist in FIG 1 dadurch veranschaulicht, dass die Fehler-Heatmap 118 wieder im ersten Verfahrensschritt 101 zur Verfügung steht, also Parameter zur Erstellung des dreidimensionalen Szenarios mit Objekten anhand der Fehler-Heatmap 118 ausgewählt werden. Alternativ kann diese Auswahl auch direkt anhand der Fehlerrate 117 erfolgen (nicht in FIG 1 dargestellt).

In einem Ausführungsbeispiel wird die Fehlerrate 117 und/oder die Fehler-Heatmap 118 gespeichert. Diese können dann für weitere Verfahrensschritte und/oder bei der Anwendung des Objekterkennungssystems zur Verfügung stehen.

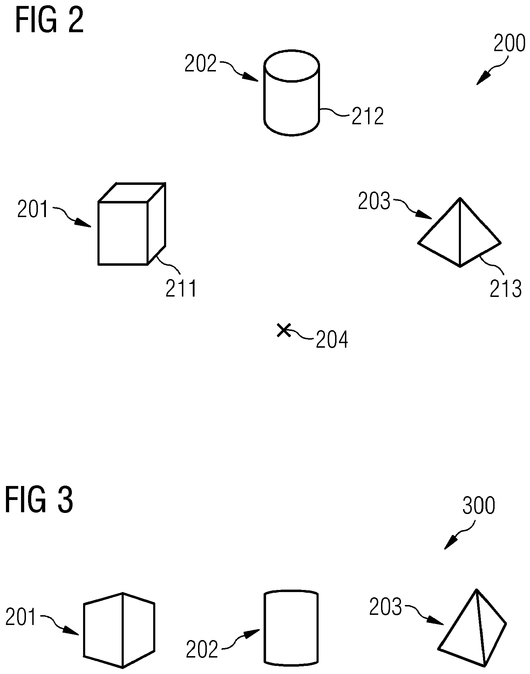

FIG 2 zeigt ein dreidimensionales Szenario 200 mit einem ersten Objekt 201, einem zweiten Objekt 202 und einem dritten Objekt 203. Das erste Objekt 201 ist als Würfel dargestellt und an einer ersten Objektposition 211 angeordnet. Das zweite Objekt 202 ist als Zylinder dargestellt und an einer zweiten Objektposition 212 angeordnet. Das dritte Objekt 203 ist als Pyramide dargestellt und an einer dritten Objektposition 213 angeordnet. Die Formen der Objekte 201, 202, 203 sind dabei nur Platzhalter, es können beliebige Objekte dargestellt werden. Die Platzhalter dienen jedoch dem Verständnis der Erstellung der virtuellen Sensordaten 112. Die Objekte 201, 202, 203 können alternativ auch nicht dargestellte Hindernisse und/oder Straßennutzer und/oder Fußgänger und/oder Fahrzeuge und/oder Radfahrer und/oder Schienen und/oder ein Lichtraumprofil umfassen. Ebenfalls in FIG 2 dargestellt ist eine Sensorposition 204. Für diese Sensorposition 204 sollen virtuelle Sensordaten 112 der Objekte 201, 202, 203 erstellt werden. Die Sensorposition 204 kann dabei als ein Ort des dreidimensionalen Szenarios 200 aufgefasst werden.

FIG 3 zeigt eine Darstellung 300 von virtuellen Sensordaten 112 eines an der Sensorposition 204 angeordneten Kamerasensors. Die Objekte 201, 202, 203 sind hier perspektivisch ausgehend von der Sensorposition 204 dargestellt und geben wieder, welches Bild eine an der Sensorposition 204 angeordnete Kamera aufnehmen würde.

Alternativ können die virtuellen Sensordaten 112 auch beinhalten, was ein an der Sensorposition angeordneter LIDAR-Sensor ausgeben würde.

Zur Erstellung der Darstellung 300 der FIG 3 oder der virtuellen LIDAR-Daten können die Parameter, insbesondere die Eingangsparameter 111 beziehungsweise der erste Parametersatz verwendet werden. Dabei können sich die virtuellen Sensordaten 112 anhand der Parameter ändern.

In einem Ausführungsbeispiel umfassen die Parameter eine Tageszeit. Je nach Tageszeit ergibt sich eine unterschiedliche Beleuchtung des dreidimensionalen Szenarios 200 aufgrund von beispielsweise in Betrieb befindlicher oder ausgeschalteter Straßenbeleuchtung. Dies führt insbesondere zu einer Veränderung von virtuellen Sensordaten 112, die als virtuelle Kameradaten ausgestaltet sind, während virtuelle LIDAR-Daten weniger beeinflusst werden. In einem Ausführungsbeispiel umfassen die Parameter einen Sonnenstand. Der Sonnenstand kann dabei insbesondere von der Tageszeit abhängen und ferner auch von einer geographischen Anordnung des dreidimensionalen Szenarios. Auch dies führt insbesondere zu einer Veränderung von virtuellen Sensordaten 112, die als virtuelle Kameradaten ausgestaltet sind, während virtuelle LIDAR-Daten weniger beeinflusst werden. In einem Ausführungsbeispiel umfassen die Parameter Wetterkonditionen. Wetterkonditionen haben insbesondere einen Einfluss auf virtuelle Kameradaten und auf virtuelle LIDAR-Daten, da diese beispielsweise bei Regen oder Schneefall ebenfalls beeinflusst werden. In einem Ausführungsbeispiel umfassen die Parameter eine Jahreszeit. Verschiedene Jahreszeiten können sich ebenfalls sowohl auf die virtuellen Kameradaten als auch auf die virtuellen LIDAR-Daten auswirken In einem Ausführungsbeispiel umfassen die Parameter eine geographische Region. In einem Ausführungsbeispiel umfassen die Parameter einen Landschaftstyp umfassen. Diese beiden Parameter wirken sich ebenfalls sowohl auf virtuelle Kameradaten als auch auf virtuelle LIDAR-Daten aus.

In einem Ausführungsbeispiel erfolgt die Objekterkennung im zweiten Verfahrensschritt 102 mittels eines trainierten neuronalen Netzwerkes. Dies ermöglicht eine einfache Umsetzung der Objekterkennung mittels künstlicher Intelligenz.

In einem Ausführungsbeispiel werden ferner Trainingsdaten für das neuronale Netzwerk erstellt, wobei bei der Erstellung der Trainingsdaten die Fehlerrate 117 berücksichtigt wird. Alternativ oder zusätzlich kann die Fehler-Heatmap 118 berücksichtigt werden, wobei diejenigen Parameter, bei denen vermehrt Fehler auftreten, in den Trainingsdaten verstärkt abgebildet werden können.

In einem Ausführungsbeispiel wird das dreidimensionale Szenario 200 im ersten Verfahrensschritt 101 mittels einer 3D-Engine erstellt. Dabei können insbesondere Spiele-Engines zum Einsatz kommen wie beispielsweise die Unity-Engine, die Unreal-Engine oder die CryEngine. Die genannten Spiele-Engines ermöglichen eine realitätsgetreue Simulation eines dreidimensionalen Szenarios 200 und sind somit für die Berechnung der virtuellen Sensordaten 112 geeignet.

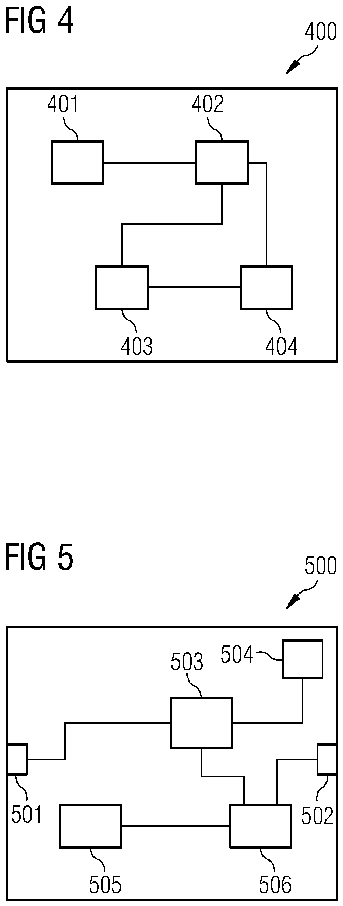

FIG 4 zeigt eine Recheneinheit 400, die eingerichtet ist, das in FIG 1 gezeigte Verfahren durchzuführen. Über eine Eingabeeinheit 401 können Eingabeparameter 111 beziehungsweise der erste Parametersatz oder der zweite Parametersatz zur Verfügung gestellt werden. Eine Engine 402, beispielsweise die bereits erwähnte 3D-Engine kann zur Erstellung des dreidimensionalen Szenarios 200 und der virtuellen Sensordaten 112 im ersten Verfahrensschritt 101 dienen. Die Objekterkennungseinheit 403 führt anhand der virtuellen Sensordaten 112 die Objekterkennung durch wie für den zweiten Verfahrensschritt 102 bereits beschrieben und kann dabei eingerichtet sein, ein trainiertes neuronales Netzwerk zu laden. In der Vergleichseinheit 404 wird der dritte Verfahrensschritt 103 durchgeführt und die Fehlerrate 117 beziehungsweise die Fehler-Heatmap 118 generiert.

Die Erfindung umfasst ferner ein Computerprogramm, umfassend Befehle, die bei Ausführung des Computerprogramms durch einen Computer diesen veranlassen, das erfindungsgemäße Verfahren wie in FIG 1 gezeigt, auszuführen.

FIG 5 zeigt ein Objekterkennungssystem 500 mit einem Eingang 500 für Sensordaten und einem Ausgang 502, wobei das Objekterkennungssystem 500 mit dem in FIG 1 gezeigten Verfahren getestet wurde. Eine Objekterkennungseinheit 503 ist mit dem Eingang 501 verbunden und eingerichtet, eine Objekterkennung anhand der am Eingang 501 anliegenden Sensordaten durchzuführen. Die Objekterkennung 503 kann dabei eine künstliche Intelligenz, insbesondere ein trainiertes neuronales Netzwerk umfassen. Es kann vorgesehen sein, dass ein Modellspeicher 504 mit der Objekterkennung 503 verbunden ist, wobei mehrere künstliche Intelligenzen, insbesondere mehrere trainierte neuronale Netzwerke im Modellspeicher 504 vorhanden sind und jeweils eine künstliche Intelligenz, insbesondere ein trainiertes neuronales Netzwerk, aus dem Modellspeicher 504 ausgewählt wird. Die Fehlerrate 117 und/oder die Fehler-Heatmap 118 sind im Objekterkennungssystem 500 in einem Fehlerspeicher 505 gespeichert. Diese Speicherung kann beispielsweise während oder nach der Durchführung des in FIG 1 gezeigten Verfahrens erfolgen. Das Objekterkennungssystem 500 umfasst ferner eine Auswerteeinheit 506 und ist durch die Auswerteeinheit 506 eingerichtet ist, eine Güte einer Objekterkennung aus realen Sensordaten anhand der Fehlerrate 117 und/oder der Fehler-Heatmap 118 zu bewerten. Es kann vorgesehen sein, dass Informationen über erkannte Objekte beziehungsweise Objektpositionen über den Ausgang 502 ausgegeben werden.

In einem Ausführungsbeispiel ist das Objekterkennungssystem 500 eingerichtet ist, anhand der Fehlerrate 117 und/oder der Fehler-Heatmap 118 einen Warnhinweis auszugeben, wenn die Güte der Objekterkennung unter einem vorgegebenen Grenzwert liegt. Dieser Warnhinweis kann ebenfalls über den Ausgang 502 ausgegeben werden.

In einem Ausführungsbeispiel umfasst die Objekterkennung mehrere unterschiedliche trainierte neuronale Netzwerke, die im Modellspeicher 504 abgelegt sind. Das Objekterkennungssystem ist eingerichtet, ein zu verwendendes trainiertes neuronales Netzwerk aus den unterschiedlichen trainierten neuronalen Netzwerken anhand der Fehlerrate 117 und/oder der Fehler-Heatmap 118 auszuwählen. Insbesondere kann sein, dass die unterschiedlichen trainierten neuronalen Netzwerke für verschiedene Parameter und/oder verschiedene Kombinationen von Parametern unterschiedlich gut geeignet sind und die Auswahl des zu verwendenden trainierten neuronalen Netzwerks danach erfolgt, welche Parameter anhand der über den Eingang 501 bereitgestellten realen Sensordaten detektiert werden. Beispielsweise könnte eines der unterschiedlichen trainierten neuronalen Netzwerke insbesondere tagsüber gut geeignet sein während ein anderes der unterschiedlichen trainierten neuronalen Netzwerke insbesondere nachts gut geeignet sein könnte. Dies kann beispielsweise in der Fehlerrate 117 und/oder der Fehler-Heatmap 118 hinterlegt sein. Wird nun anhand der realen Sensordaten erkannt, dass die Objekterkennung nachts erfolgen soll, kann das nachts gut geeignete trainierte neuronale Netzwerk ausgewählt werden. Diese Überlegung kann analog auch auf die anderen Parameter angewendet werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Testen eines Objekterkennungssystems (500) mit den folgenden Schritten:
- Erstellen eines dreidimensionalen Szenarios (200) mit Objekten (201, 202, 203) und von aus dem dreidimensionalen Szenario (200) abgeleiteten virtuellen Sensordaten (112), wobei die virtuellen Sensordaten (112) für mindestens einen Ort des dreidimensionalen Szenarios (200) berechnet werden;
- Durchführung einer Objekterkennung mittels der virtuellen Sensordaten (112);
- Vergleich von mittels der Objekterkennung erkannten Objekten und erkannten Objektpositionen mit aus dem dreidimensionalen Szenario (200) vorgegebenen Objekten und vorgegebenen Objektpositionen; und
- Berechnen einer Fehlerrate (117) aus dem Vergleich.

2. Verfahren nach Anspruch 1, wobei die virtuellen Sensordaten virtuelle Kameradaten und/oder virtuelle LIDAR-Daten umfassen.

3. Verfahren nach Anspruch 1 oder 2, wobei beim Erstellen des dreidimensionalen Szenarios (200) ein erster Parametersatz mit einer vorgegebenen Anzahl an Parametern berücksichtigt wird und wobei die Fehlerrate (117) in Abhängigkeit von den Parametern berechnet wird.

4. Verfahren nach Anspruch 3, wobei die Parameter eine Tageszeit und/oder einen Sonnenstand und/oder Wetterkonditionen und/oder eine Jahreszeit und/oder eine geographische Region und/oder einen Landschaftstyp umfassen.

5. Verfahren nach Anspruch 3 oder 4, wobei anhand der Fehlerrate ein zweiter Parametersatz ausgewählt wird, wobei das Verfahren anschließend für den zweiten Parametersatz erneut ausgeführt wird.

6. Verfahren nach einem der Ansprüche 1 bis 5, wobei die Fehlerrate (117) gespeichert wird.

7. Verfahren nach einem der Ansprüche 1 bis 6, wobei die Objekterkennung mittels eines trainierten neuronalen Netzwerkes erfolgt.

8. Verfahren nach Anspruch 7, wobei ferner Trainingsdaten für das neuronale Netzwerk erstellt werden, wobei bei der Erstellung der Trainingsdaten die Fehlerrate berücksichtigt wird.

9. Verfahren nach einem der Ansprüche 1 bis 8, wobei das dreidimensionale Szenario (200) mittels einer 3D-Engine erstellt wird.

10. Verfahren nach einem der Ansprüche 1 bis 9, wobei die Objekte (201, 202, 203) Hindernisse und/oder Straßennutzer und/oder Fußgänger und/oder Fahrzeuge und/oder Radfahrer und/oder Schienen und/oder ein Lichtraumprofil umfassen.

11. Recheneinheit (400), die eingerichtet ist, das Verfahren nach einem der Ansprüche 1 bis 10 durchzuführen.

12. Computerprogramm, umfassend Befehle, die bei Ausführung des Computerprogramms durch einen Computer diesen veranlassen, ein Verfahren gemäß einem der Ansprüche 1 bis 10 auszuführen.

13. Objekterkennungssystem (500) mit einem Eingang (501) für Sensordaten und einem Ausgang (502), wobei das Objekterkennungssystem (500) mit dem Verfahren nach einem der Ansprüche 1 bis 10 getestet wurde, wobei die Fehlerrate (117) im Objekterkennungssystem (500) gespeichert ist, wobei das Objekterkennungssystem (500) eingerichtet ist, eine Güte einer Objekterkennung aus realen Sensordaten anhand der Fehlerrate (117) zu bewerten.

14. Objekterkennungssystem (500) nach Anspruch 13, wobei das Objekterkennungssystem (500) eingerichtet ist, anhand der Fehlerrate (117) einen Warnhinweis auszugeben, wenn die Güte der Objekterkennung unter einem vorgegebenen Grenzwert liegt.

15. Objekterkennungssystem (500) nach Anspruch 13 oder 14, wobei die Objekterkennung mehrere unterschiedliche trainierte neuronale Netzwerke umfasst und wobei das Objekterkennungssystem (500) eingerichtet ist, ein zu verwendendes trainiertes neuronales Netzwerk aus den unterschiedlichen trainierten neuronalen Netzwerken anhand der Fehlerrate (117) auszuwählen.
